# EUROPEAN PATENT APPLICATION

(11) **EP 4 418 351 A1**
(43) Date of publication of application: **21.08.2024**
(21) Application number: 22900888.3
(22) Date of filing: 26.09.2022
(51) Int. Cl.: H01M 4/139, H01G 11/86, H01G 13/00, H01M 4/04, H01M 10/04, H01M 10/052, H01M 10/0585

(54) **ELECTRODE UNIT MANUFACTURING DEVICE, AND ELECTRODE UNIT MANUFACTURING METHOD**

(30) Priority: 02.12.2021 JP 2021196204
(71) Applicant: KABUSHIKI KAISHA TOYOTA JIDOSHOKKI, Kariya-shi, Aichi 448-8671 (JP)
(72) Inventor: KINUGAWA, Tatsuya, Kariya-shi, Aichi 448-8671 (JP); KOYAMA, Tetsuya, Kariya-shi, Aichi 448-8671 (JP); MATSUMOTO, Noriyuki, Kariya-shi, Aichi 448-8671 (JP)
(74) Representative: TBK
(86) International application number: PCT/JP2022/035717
(87) International publication number: WO 2023/100453

(57) **Abstract**

An electrode unit manufacturing device 50 is an electrode unit manufacturing device for manufacturing an electrode unit 11A by welding a resin member 21B to a bipolar electrode 11 including a current collector 15, and an active material layer provided on one surface 15a and the other surface 15b of the current collector 15. The electrode unit manufacturing device includes a robot hand 30 that transports the bipolar electrode 11 in the air while suctioning and holding the bipolar electrode 11, and a welding device 40 including a welding unit 45 that welds the resin member 21B to the bipolar electrode 11 in a state of being suctioned and held in the air by the robot hand 30.

## Description

### Technical Field

The present disclosure relates to an electrode unit manufacturing device and an electrode unit manufacturing method.

### Background Art

Patent Literature 1 discloses a method of forming a bipolar electrode unit by welding a resin frame to a bipolar electrode. In this method, first, in a state in which the resin frame is temporarily fixed to a first surface of an electrode plate of the bipolar electrode, the bipolar electrode and the resin frame are transported between a pair of pressing members of which a predetermined clearance is adjusted. Then, the electrode plate of the bipolar electrode and the resin frame are heated by a heater, are pressed by a compression roller, and are cooled by a cooling plate. According to this, the resin frame is welded to the electrode plate of the bipolar electrode, thereby forming the bipolar electrode unit.

### Citation List

### Patent Literature

Patent Literature 1: Japanese Unexamined Patent Publication No. 2020-95909

### Summary of Invention

### Technical Problem

By the way, when the resin member is temporarily fixed (for example, temporarily welded) or welded to the electrode as in the method described in Patent Literature 1, it is considered that welding is performed in a state in which the electrode in each stage is placed on a stage or a pallet. In this way, when the electrode is placed on the stage or the pallet, there is a concern that metal pieces of a current collector constituting the electrode, or foreign matters such as an active material of an active material layer which slip down from the electrode may adhere to the stage or the pallet and remain. Accordingly, in this case, when the subsequent electrode is placed on the stage or the pallet, there is a concern that the foreign matters may adhere to the electrode.

Here, an object of the present disclosure is to provide an electrode unit manufacturing device and an electrode unit manufacturing method which are capable of welding a resin member while suppressing adhesion of foreign matters to an electrode.

### Solution to Problem

An electrode unit manufacturing device according to the present disclosure is an electrode unit manufacturing device for manufacturing an electrode unit by welding a resin member to an electrode including a current collector and an active material layer provided on a front surface of the current collector. The electrode unit manufacturing device includes a transport unit configured to transport the electrode in the air while suctioning and holding the electrode, and a welding device including a welding unit configured to weld the resin member to the electrode in a state of being suctioned and held in the air by the transport unit.

An electrode unit manufacturing method according to the present disclosure is an electrode unit manufacturing method for manufacturing an electrode unit by welding a resin member to an electrode including a current collector and an active material layer provided on a front surface of the current collector. The electrode unit manufacturing method includes a first step of transporting the electrode in the air while suctioning and holding the electrode, and a second step of welding the resin member to the electrode in a state of being suctioned and held in the air after the first step.

In the manufacturing device and the manufacturing method, when manufacturing the electrode unit by welding the resin member to the electrode, the resin member is welded to the electrode in a state in which the electrode is suctioned and held in the air. Accordingly, it is possible to avoid that foreign matters which slip down from the electrode adhere to the subsequent electrode. As a result, it is possible to weld the resin member while suppressing adhesion of foreign matters to the electrode.

In the electrode unit manufacturing device according to the present disclosure, the welding device may include an arrangement unit configured to hold the resin member before being welded to the electrode and to arrange the resin member on the front surface of the electrode in the state of being suctioned and held in the air by the transport unit, and the welding unit may weld the resin member arranged on the front surface by the arrangement unit to the current collector. In this case, the resin member is arranged and welded with respect to the front surface of the current collector of the electrode. Accordingly, it is possible to avoid that foreign matters which slip down from the electrode adhere to the subsequent electrode. As a result, during arrangement and welding of the resin member, it is possible to avoid foreign matters from being sandwiched between the electrode and the resin member.

In the electrode unit manufacturing device according to the present disclosure, the welding device may include a first grip unit configured to move while gripping one end of a base material held by a support unit to pull out the base material from the support unit, a second grip unit configured to further grip the base material pulled out by movement of the first grip unit at a position spaced apart from the first grip unit, and a cutting unit configured to cut out the base material while maintaining a state where the base material is gripped by the first grip unit and the second grip unit to form the resin member. In this case, the resin member can be easily formed from the base material.

In the electrode unit manufacturing device according to the present disclosure, the welding device may include a sensor configured to detect the resin member in a state of being gripped by the first grip unit and the second grip unit, and a moving unit configured to perform alignment of the resin member on the basis of a detection result of the sensor by moving the first grip unit and the second grip unit before the resin member is held by the arrangement unit. In this case, positional accuracy of the resin member with respect to a welding position is improved.

In the electrode unit manufacturing device according to the present disclosure, the first grip unit may move while gripping a pair of the base materials stacked and held in the support unit to pull out the pair of base materials from the support unit, the second grip unit may further grip the pair of base materials pulled out by movement of the first grip unit at a position spaced apart from the first grip unit, the cutting unit may cut the pair of base materials to form a pair of the resin members, the arrangement unit may move in a stacking direction of the resin members while holding at least one of the pair of resin members to change an interval between the pair of resin members, the transport unit may transport the electrode in such a manner that the current collector is sandwiched between the pair of resin members in a state in which an interval between the pair of the resin members is enlarged due to movement of the arrangement unit, and the welding unit may weld each of the pair of resin members to the current collector in a state in which the pair of resin members are respectively arranged on the front surface of the current collector and a rear surface opposite to the front surface of the current collector due to movement of the arrangement unit. In this case, the pair of resin members can be formed and welded with respect to each of the front surface and rear surface of the current collector by pulling-out of the base material by the first grip unit which is performed once, and cutting-out of the base material by the cutting unit which is performed once.

In the electrode unit manufacturing device according to the present disclosure, the welding device may include a sensor configured to detect the resin member in a state of being held by the arrangement unit, and a moving unit configured to move the arrangement unit in a state in which the resin member is held by the arrangement unit to perform alignment of the resin member on the basis of a detection result of the sensor. In this case, positional accuracy of the resin member with respect to a welding position is improved.

### Advantageous Effects of Invention

According to the present disclosure, it is possible to provide an electrode unit manufacturing device and an electrode unit manufacturing method which are capable of welding a resin member while suppressing adhesion of foreign matters to an electrode.

### Brief Description of Drawings

FIG. 1 is a schematic cross-sectional view of a power storage module according to an embodiment.
FIG. 2 is a view illustrating an example of an electrode unit.
FIG. 3 is a schematic view illustrating a part of an electrode unit manufacturing device.
FIG. 4 is a schematic view illustrating another part of the electrode unit manufacturing device.
FIG. 5 is a schematic view illustrating still another part of the electrode unit manufacturing device.
FIG. 6 is a flowchart illustrating a step of an electrode unit manufacturing method.
FIG. 7 is a side view illustrating a step of the electrode unit manufacturing method.
FIG. 8 is a view illustrating a modification example of a welding device.

### Description of Embodiments

Hereinafter, an embodiment according to the present disclosure will be described in detail with reference to the accompanying drawings. Note that, in description of the drawings, the same reference numeral will be given to the same or equivalent element, and redundant description may be omitted.

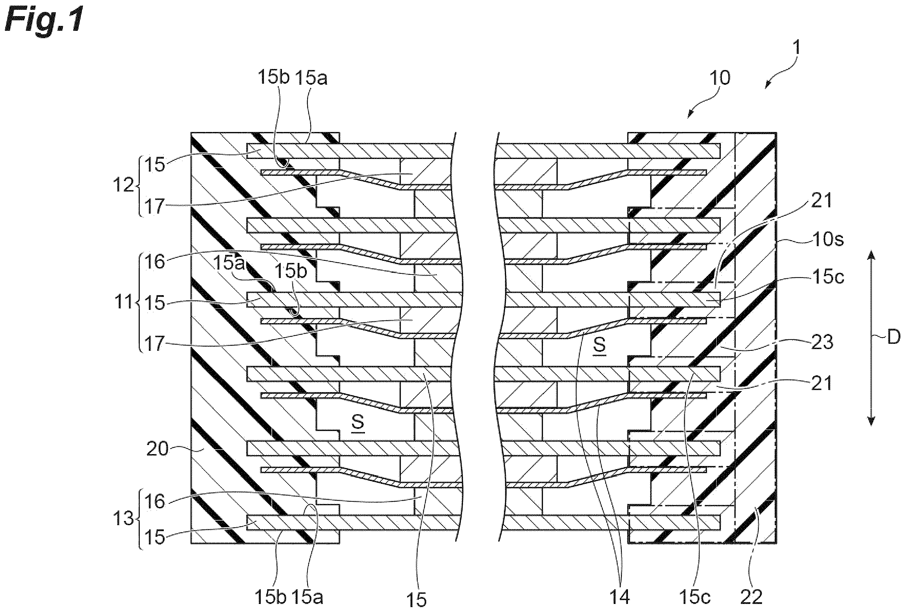

FIG. 1 is a schematic cross-sectional view of a power storage module according to this embodiment. A power storage module 1 shown in FIG. 1 is a power storage module that is used, for example, in batteries of various vehicles such as a fork lift, a hybrid vehicle, and an electric vehicle. For example, the power storage module 1 is a secondary battery such as a nickel-hydrogen secondary battery and a lithium ion secondary battery. The power storage module 1 may be an electric double layer capacitor or a solid state battery. Here, a case where the power storage module 1 is the lithium ion secondary battery is exemplified.

The power storage module 1 includes a stacked body 10 and a resin frame 22. The stacked body 10 includes a plurality of bipolar electrodes 11, a negative terminal electrode 12, a positive terminal electrode 13, a plurality of separators 14, a plurality of first resin layers 21, a plurality of second resin layers 23, and an electrolyte (not illustrated).

Each of the bipolar electrodes 11 includes a current collector 15, a positive electrode active material layer 16, and a negative electrode active material layer 17. For example, the current collector 15 has a rectangular sheet shape. The positive electrode active material layer 16 is provided on one surface 15a of the current collector 15. The negative electrode active material layer 17 is provided on the other surface 15b of the current collector 15. The plurality of bipolar electrodes 11 are stacked so that the positive electrode active material layer 16 of one bipolar electrode 11, and the negative electrode active material layer 17 of another bipolar electrode 11 face each other. Here, a direction in which the bipolar electrodes 11 are stacked is referred to as a stacking direction D.

The positive electrode active material layer 16 and the negative electrode active material layer 17 have a rectangular shape when viewed from the stacking direction D. The negative electrode active material layer 17 is one size larger than the positive electrode active material layer 16 when viewed from the stacking direction D. That is, in a plan view from the stacking direction D, the entirety of a formation region of the positive electrode active material layer 16 is located within a formation region of the negative electrode active material layer 17.

The negative terminal electrode 12 includes the current collector 15, and the negative electrode active material layer 17 provided on the other surface 15b of the current collector 15. The negative terminal electrode 12 does not include the positive electrode active material layer 16. That is, an active material layer is not provided on the one surface 15a of the current collector 15 of the negative terminal electrode 12. The negative terminal electrode 12 is stacked on the bipolar electrode 11 at one end of the stacked body 10 in the stacking direction D. The negative terminal electrode 12 is stacked on the bipolar electrode 11 so that the negative electrode active material layer 17 faces the positive electrode active material layer 16 of the bipolar electrode 11. Accordingly, the one surface 15a of the current collector 15 of the negative terminal electrode 12 faces an outer side of the stacked body 10, and a part thereof is exposed to the outside of the stacked body 10.

The positive terminal electrode 13 includes the current collector 15, and the positive electrode active material layer 16 provided on the one surface 15a of the current collector 15. The positive terminal electrode 13 does not include the negative electrode active material layer 17. That is, an active material layer is not provided on the other surface 15b of the current collector 15 of the positive terminal electrode 13. The positive terminal electrode 13 is stacked on the bipolar electrode 11 at the other end of the stacked body 10 in the stacking direction D. The positive terminal electrode 13 is stacked on the bipolar electrode 11 so that the positive electrode active material layer 16 faces the negative electrode active material layer 17 of the bipolar electrode 11. Accordingly, the other surface 15b of the current collector 15 of the positive terminal electrode 13 faces an outer side of the stacked body 10, and a part thereof is exposed to the outside of the stacked body 10.

Each of the separators 14 is disposed between the bipolar electrodes 11 adjacent to each other, between the negative terminal electrode 12 and the bipolar electrode 11, and between the positive terminal electrode 13 and the bipolar electrode 11. The separator 14 is interposed between the positive electrode active material layer 16 and the negative electrode active material layer 17. The separator 14 isolates the positive electrode active material layer 16 and the negative electrode active material layer 17 from each other, and allows a charger carrier such as lithium ions to pass therethrough while preventing short-circuit due to contact between adjacent electrodes.

The current collector 15 is a chemically inert electric conductor that allows a current to continuously flow through the positive electrode active material layer 16 and the negative electrode active material layer 17 during discharging or charging of the lithium ion secondary battery. Examples of a material of the current collector 15 include a metallic material, a conductive resin material, a conductive inorganic material, and the like. Examples of the conductive resin material include a resin in which a conductive filler is added to a conductive polymer material or a non-conductive polymer material as necessary, and the like. The current collector 15 may include a plurality of layers. In this case, each layer of the current collector 15 may contain a metallic material or a conductive resin material.

A coating layer may be formed on a front surface of the current collector 15. The coating layer may be formed by a known method such as a plating treatment and a spray coating. The current collector 15 may have, for example, a plate shape, a foil shape (for example, metal foil), a film shape, a mesh shape, or the like. Examples of the metal foil include aluminum foil, copper foil, nickel foil, titanium foil, stainless steel foil, and the like. Examples of the stainless steel foil include SUS 304, SUS 316, SUS 301, and the like which are defined in JIS G 4305:2015. When using the stainless steel foil as the current collector 15, the mechanical strength of the current collector 15 can be secured. The current collector 15 may be alloy foil the metals or foil in which a plurality of pieces of the metal foil are integrated. In a case where the current collector 15 has a foil shape, the thickness of the current collector 15 may be, for example, 1 µm to 100 µm.

The positive electrode active material layer 16 contains a positive electrode active material capable of intercalating and deintercalating a charge carrier such as lithium ions. Examples of the positive electrode active material include lithium composite metal oxides having a layered rock salt structure, metal oxides having a spinel structure, polyanionic compounds, and the like. The positive electrode active material may be a material that can be used in the lithium ion secondary battery. The positive electrode active material layer 16 may contain a plurality of positive electrode active materials. In this embodiment, the positive electrode active material layer 16 contains olivine-type lithium iron phosphate (LiFePO₄) as a composite oxide.

The negative electrode active material layer 17 contains a negative electrode active material capable of intercalating and deintercalating a charge carrier such as lithium ions. The negative electrode active material may be any of an elementary substance, an alloy, and a compound. Examples of the negative electrode active material include Li, carbon, a metal compound, and the like. The negative electrode active material may be an element that can be alloyed with lithium, a compound thereof, or the like. Examples of the carbon include natural graphite, artificial graphite, hard carbon (non-graphitizable carbon), soft carbon (easily graphitizable carbon), and the like. Examples of the artificial graphite include highly oriented graphite, mesocarbon microbeads, and the like. Examples of the element that can be alloyed with lithium include silicon, tin, and the like. In this embodiment, the negative electrode active material layer 17 contains graphite as a carbon-based material.

Each of the positive electrode active material layer 16 and the negative electrode active material layer 17 (hereinafter, may be simply referred to as "active material layer") may further contain a conductive agent, a binder, an electrolyte (polymer matrix, an ion-conductive polymer, an electrolytic solution, or the like), an electrolyte supporting salt (lithium salt) for enhancing ion conductivity, and the like as necessary. The conductive agent is added to enhance conductivity of each electrode (the bipolar electrode 11, the negative terminal electrode 12, and the positive terminal electrode 13). Examples of the conductive agent include acetylene black, carbon black, graphite, and the like.

Examples of the binder include fluorine-containing resins such as polyvinylidene fluoride, polytetrafluoroethylene, and fluororubber, thermoplastic resins such as polypropylene and polyethylene, imide-based resins such as polyimide and polyamideimide, alkoxysilyl group-containing resins, acrylic resins such as acrylic acid and methacrylic acid, styrene-butadiene rubber (SBR), carboxymethyl cellulose, alginates such as sodium alginate and ammonium alginate, water-soluble cellulose ester crosslinked products, starch-acrylic acid graft polymers, and the like. The binders can be used alone or in combination. As a solvent, for example, water, N-methyl-2-pyrrolidone (NMP), or the like is used.

The separator 14 may be, for example, a porous sheet or nonwoven fabric containing a polymer that absorbs and holds an electrolyte. Examples of a material of the separator 14 include polypropylene, polyethylene, polyolefin, polyester, and the like. The separator 14 may have a single layer structure or a multilayer structure. The multilayer structure may include, for example, an adhesive layer or a ceramic layer as a heat-resistant layer, and the like. The separator 14 may be impregnated with an electrolyte. The separator 14 may consist of an electrolyte such as a polymer electrolyte and an inorganic electrolyte. Examples of the electrolyte impregnated in the separator 14 include a liquid electrolyte (electrolytic solution) containing a nonaqueous solvent and an electrolyte salt dissolved in the nonaqueous solvent, a polymer gel electrolyte containing an electrolyte held in a polymer matrix, and the like.

In a case where the separator 14 is impregnated with an electrolyte, as an electrolyte salt thereof, a known lithium salt such as LiClO₄, LiAsF₆, LiPF₆, LiBF₄, LiCF₃SO₃, LiN(FSO₂)₂, and LiN(CF₃SO₂)₂ may be used. In addition, as the nonaqueous solvent, known solvents such as cyclic carbonates, cyclic esters, chain carbonates, chain esters, and ethers may be used. Note that, two or more kinds of the known solvent materials may be used in combination.

The first resin layer 21, the resin frame 22, and the second resin layer 23 constitute a sealing portion 20. The sealing portion 20 is formed in a frame shape at a peripheral edge portion of the stacked body 10 to surround the stacked body 10. The sealing portion 20 is joined to each of the one surface 15a and the other surface 15b of the current collector 15 at a peripheral edge portion 15c of the current collector 15. The sealing portion 20 seals each space S between a plurality of the current collectors 15 adjacent to each other in the stacking direction D. An electrolyte is accommodated in the space S. In a case where the electrolyte is a liquid, the sealing portion 20 prevents the electrolyte from permeating to the outside. The sealing portion 20 suppresses a moisture and the like from intruding into the space S from the outside of the stacked body 10. An edge portion of the separator 14 is embedded in the sealing portion 20. The sealing portion 20 contains an insulating material. Examples of the material of the sealing portion 20 include various resin materials such as polypropylene, polyethylene, polystyrene, an ABS resin, modified polypropylene, and an acrylonitrile styrene resin.

The first resin layer 21 is provided in each of the current collectors 15. Accordingly, the first resin layer 21 is stacked on each other along the stacking direction D. The first resin layer 21 has a frame shape and is provided at the peripheral edge portion 15c of the current collector 15. That is, the first resin layer 21 is provided to range from the one surface 15a of the current collector 15 to the other surface 15b through an end surface, and covers the peripheral edge portion 15c. The first resin layer 21 is welded to the one surface 15a and the other surface 15b of the current collector 15.

The second resin layer 23 is disposed to be sandwiched between a plurality of the first resin layers 21 adjacent to each other in the stacking direction D. According to this, the second resin layer 23 maintains a space between the first resin layers 21 adjacent to each other, that is, the current collectors 15 adjacent to each other. The second resin layer 23 has a frame shape, and is disposed on the peripheral edge portion 15c of the current collector 15 when viewed from the stacking direction D. The second resin layer 23 can be welded to at least one of a pair of the first resin layers 21 adjacent to each other in the stacking direction D. Here, an end of the separator 14 is embedded between the first resin layer 21 and the second resin layer 23.

The resin frame 22 is formed by integrating a plurality of the first resin layers 21 and a plurality of the second resin layers 23. When an end of the first resin layer 21 on a side opposite to the space S, and an end of the second resin layer 23 on a side opposite to the space S are welded to each other, the resin frame 22 collectively seals a plurality of the spaces S. A surface of the resin frame 22 on a side opposite to the space S constitutes an outer surface 10s of the stacked body 10.

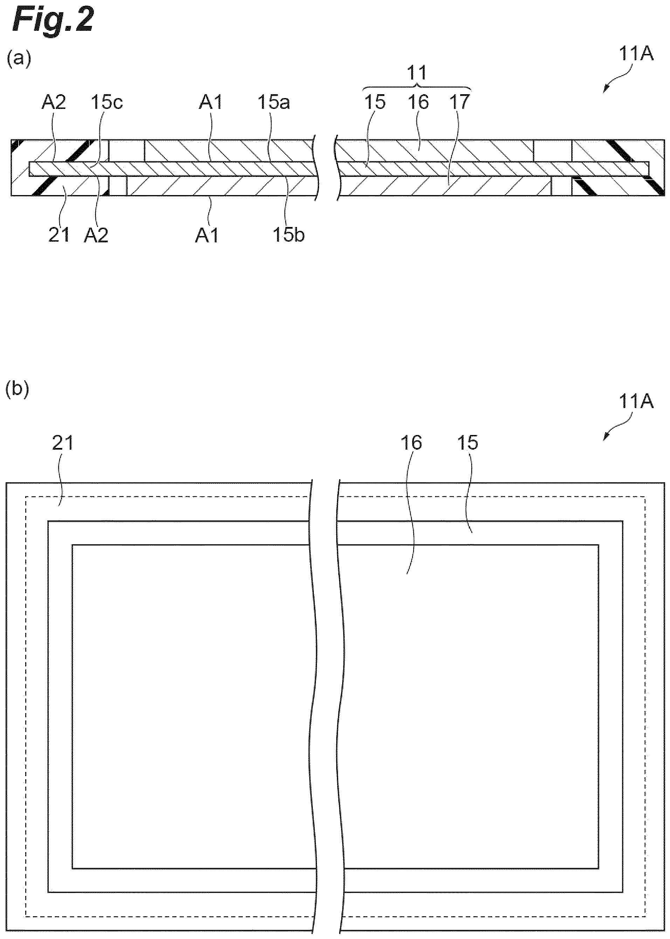

In the above-described power storage module 1, a plurality of electrode units are constituted. FIG. 2 is a view illustrating an example of the electrode unit. FIG. 2(a) is a cross-sectional view and FIG. 2(b) is a plan view. In FIG. 2, an electrode unit 11A including the bipolar electrode 11 is exemplified. The electrode unit 11A includes the bipolar electrode 11 and the first resin layer 21 welded to the bipolar electrode 11. The one surface (front surface) 15a and the other surface (rear surface) 15b of the current collector 15 include a first region A1 where an active material layer (the positive electrode active material layer 16 or the negative electrode active material layer 17) is formed and a second region A2 exposed from the active material layer. The first resin layer 21 is welded to the one surface 15a and the other surface 15b of the current collector 15 in the second region A2.

Note that, in FIG. 2, the electrode unit 11A including the bipolar electrode 11 is illustrated, but in the power storage module 1, an electrode unit including the positive terminal electrode 13 and an electrode unit including the negative terminal electrode 12 are also constructed. As compared with the electrode unit 11A, the electrode unit including the positive terminal electrode 13 is different from the electrode unit 11A in that the negative electrode active material layer 17 is not formed on the other surface 15b of the current collector 15, and the electrode unit including the negative terminal electrode 12 is different from the electrode unit 11A in that the positive electrode active material layer 16 is not formed on the one surface 15a of the current collector 15, and the other configurations are common. The stacked body 10 is constituted by stacking a plurality of the above-described electrode units through the second resin layer 23 and the separator 14. Hereinafter, an electrode unit manufacturing device and an electrode unit manufacturing method will be described by using the electrode unit 11A as an example.

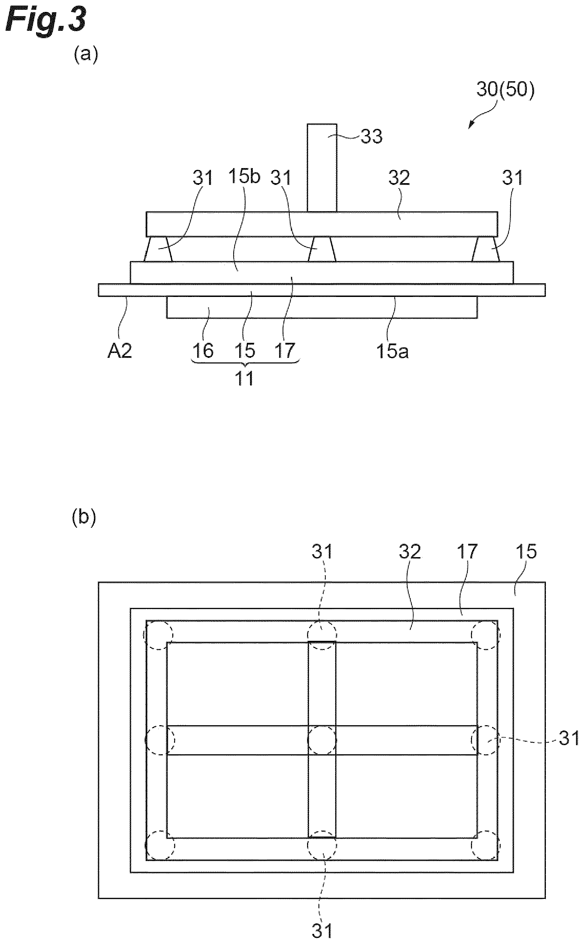

FIG. 3 is a schematic view illustrating a part of the electrode unit manufacturing device. FIG. 3(a) is a side view and FIG. 3(b) is a plan view. As illustrated in FIG. 3, an electrode unit manufacturing device 50 includes a robot hand (transport unit) 30. The robot hand 30 includes a plurality of suction pads 31, an air pipe 32, and a support unit 33. The robot hand 30 is connected to a drive unit (not illustrated) through the support unit 33, and can three dimensionally move by the drive unit. The plurality of suction pads 31 are arranged to be separated from each other. Here, the plurality of suction pads 31 are arranged to be distributed over the entirety of the active material layer in the same plane when the negative electrode active material layer 17 (or the positive electrode active material layer 16, hereinafter, simply referred to as "active material layer") is disposed to face the robot hand 30.

The air pipe 32 is connected to each of the plurality of suction pads 31. The air pipe 32 performs air intake and air exhaust inside the plurality of suction pads 31, thereby suctioning a member (for example, the negative electrode active material layer 17) disposed to face the plurality of suction pads 31 to the suction pads 31 or releasing the suction of the member in the suction pads 31. The support unit 33 is connected to the air pipe 32, and supports the air pipe 32 and the suction pad 31 to the robot hand 30. A pipe communicating with the air pipe 32 may be provided inside the support unit 33.

In this way, in the robot hand 30, the suction pads 31 suction the active material layer, and thus the bipolar electrode 11 can be transported in the air to any position while being suctioned and held. Note that, transportation by the robot hand 30 is performed in such a manner that a surface that is suctioned by the suction pads 31 in the bipolar electrode 11 becomes an upper surface in a vertical direction (direction of gravity). In addition, the transportation in the air stated here represents transportation in a state in which a surface opposite to a surface suctioned to the suction pads 31 of the bipolar electrode 11 does not come into contact with and is not supported by another device or member. As described above, the plurality of suction pads 31 are disposed and arranged over the entirety of the active material layer. Accordingly, when the robot hand 30 suctions and supports the bipolar electrode 11, bending of the bipolar electrode 11 is suppressed.

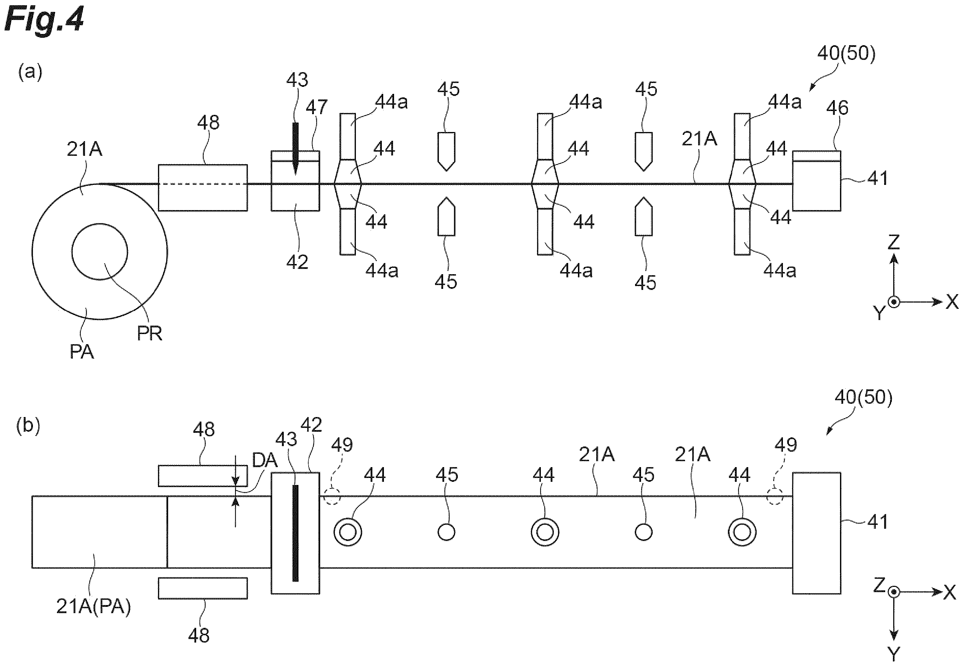

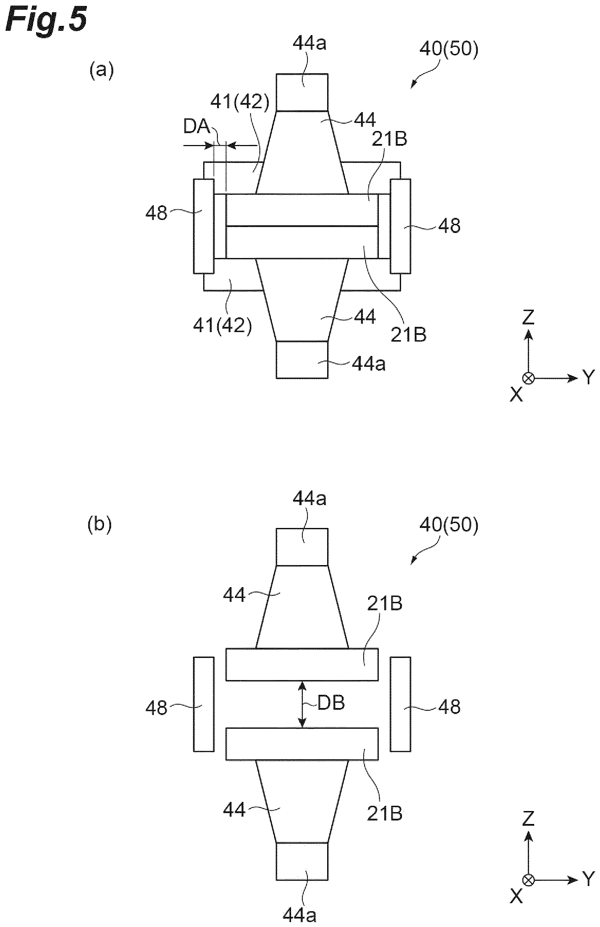

FIG. 4 and FIG. 5 are schematic views illustrating another part of the electrode unit manufacturing device. In the following drawings, an orthogonal coordinate system including an X-axis, a Y-axis, and a Z-axis is illustrated. As an example, an X-axis direction and a Y-axis direction are first and second horizontal direction, and a Z-axis direction is a vertical direction. FIG. 4(a) is a side view (view when viewed from the Y-direction), FIG. 4(b) is a plan view (view when viewed from the Z-direction), and FIG. 5 is another side view (view when viewed from the X-direction).

As illustrated in FIG. 4 and FIG. 5, the electrode unit manufacturing device 50 includes a welding device 40. The welding device 40 includes a first grip unit 41, a second grip unit 42, a cutting unit 43, a plurality of pairs of suction units (arrangement units) 44, a plurality of pairs of welding units 45, moving units 46 and 47, a pair of guide units 48, and a plurality of sensors 49. In addition, a support unit PA that holds a base material 21A for a resin member 21B is disposed at a front stage of the welding device 40. In the support unit PA, the base material 21A is wound around a reel PR and is held in a roll shape. The resin member 21B is obtained by cutting the base material 21A in an appropriate length. Note that, as to be described later, a plurality of the resin members 21B obtained by cutting the base material 21A are disposed in a frame shape and are integrated to form the first resin layer 21. Accordingly, in this embodiment, the resin member 21B is a member that becomes a part of the first resin layer 21.

When the first grip unit 41 is moved along the X-axis direction by the moving unit 46 while gripping one end of the base material 21A held by the support unit PA, the base material 21A is pulled out from the support unit PA. The first grip unit 41 is, for example, a chuck. The second grip unit 42 further grips the base material 21A that is pulled out due to movement of the first grip unit 41 at a position spaced apart from the first grip unit 41 (by approximately a length of the first resin layer 21). The second grip unit 42 is a pair of elastic members (for example, sponges) disposed to sandwich the base material 21A therebetween along the Z-direction, and can grip the base material 21A by sandwiching the base material 21A along the Z-direction.

The cutting unit 43 cuts out the base material 21A while maintaining a state in which the base material 21A is gripped by the first grip unit 41 and the second grip unit 42 to form the first resin layer 21 in a state of being gripped by the first grip unit 41 and the second grip unit 42. The cutting unit 43 includes, for example, a Thomson blade, and cuts out the base material 21A at a position where the base material 21A is gripped by the second grip unit 42. According to this, a rectangular resin member 21B is formed between the first grip unit 41 and the second grip unit 42.

The plurality of pairs of suction units 44 are suction pads and are dispersed and arranged along a longitudinal direction (here, the X-axis direction) of the resin member 21B at a position between the first grip unit 41 and the second grip unit 42. A pair of suction units 44 are disposed to face each other through the resin member 21B along the Z-axis direction. In other words, each of the pair of suction units 44 is disposed to vertically sandwich the resin member 21B.

Furthermore, in other words, the plurality of pairs of suction units 44 include a group of suction units 44 (hereinafter, may be referred to as "upper suction units") arranged on an upper side of the resin member 21B in the Z-axis direction, and a group of suction units 44 (hereinafter, may be referred to as "lower suction units") arranged on a lower side of the resin member 21B in the Z-axis direction. Each of the suction units 44 is supported by an air tube and a support unit 44a that is an upper and lower cylinder, and is movable along the Z-axis direction. That is, a pair of the suction units 44 are movable so that an interval therebetween in the Z-axis direction varies.

Here, the first grip unit 41 moves while gripping a pair of the base materials 21A which are stacked and held in the support unit PA, thereby pulling out the pair of base materials 21A overlapped each other from the support unit PA. In addition, the second grip unit 42 grips the pair of base materials 21A pulled out due to movement of the first grip unit 41 at a position spaced apart from the first grip unit 41. Then, the cutting unit 43 collectively cuts out the pair of base materials 21A while maintaining a state in which the base materials 21A are gripped by the first grip unit 41 and the second grip unit 42, and the cut-out base materials 21A are overlapped in the Z-axis direction. As a result, the pair of resin members 21B in a state of being gripped by the first grip unit 41 and the second grip unit 42 are collectively formed.

Accordingly, one (that is, each upper suction unit) of the pair of suction units 44 faces one of the overlapped resin members 21B, and the other (that is, each lower suction unit) of the pair of suction units 44 faces the other of the overlapped resin members 21B. Therefore, each upper suction unit and each lower suction unit can be moved to approach the resin members 21B, and can suction each of the pair of resin members 21B when being brought into contact with each of the pair of resin members 21B.

In addition, each of the upper suction unit and the lower suction unit can be moved to be spaced apart from each other in a state of suctioning each of the pair of resin members 21B, and can enlarge an interval DB between the pair of the resin members 21B (also can reduce the interval DB when being moved in an opposite direction). That is, the suction units 44 can change the interval DB between the pair of resin members 21B through movement in the stacking direction (Z-axis direction) of the resin members 21B while suctioning at least one of (here, both) the pair of resin members 21B.

The robot hand 30 can transport the bipolar electrode 11 in such a manner that the second regions A2 of the one surface 15a and the other surface 15b of the current collector 15 are sandwiched between the pair of resin members 21B in a state in which the interval DB therebetween is enlarged due to movement of the suction unit 44. According to this, the resin members 21B are arranged with respect to the bipolar electrode 11 so that the second regions A2 face the resin members 21B. In this way, the suction units 44 function as an arrangement unit that holds the resin members 21B before being welded to the bipolar electrode 11 and arranges the resin members 21B on the one surface 15a and the other surface 15b of the bipolar electrode 11 in a state of being suctioned and held in the air by the robot hand 30.

The plurality of welding units 45 weld the resin members 21B to the bipolar electrode 11. A plurality of pairs of the welding units 45 are dispersed and arranged in the longitudinal direction (here, the X-axis direction) of the resin members 21B at a position different from that of the suction units 44. Here, a pair of the welding units 45 are arranged to face each other through the resin members 21B along the Z-axis direction. In other words, the pair of welding units 45 are arranged to vertically sandwich the resin members 21B. According to this, with respect to the bipolar electrode 11 held by the robot hand 30, each of the plurality of welding units 45 can weld each of the pair of resin members 21B to each of the one surface 15a of the current collector 15 and the other surface 15b of the current collector 15 in the second region A2. Each of the welding units 45 is a device that heats each of the resin members 21B in a contact or non-contact manner, and is constituted, for example, by a soldering iron or a laser welding machine. In this way, each of the welding units 45 welds each of the pair of resin members 21B to the current collector 15 in a state in which the pair of resin members 21B are disposed on the one surface 15a and the other surface 15b of the current collector 15 due to movement of the suction units (arrangement unit) 44.

The moving unit 46 is provided in the first grip unit 41 and moves the first grip unit 41. The moving unit 47 is provided in the second grip unit 42 and moves the second grip unit 42. Accordingly, the moving units 46 and 47 can adjust the position of the resin members 21B by moving the first grip unit 41 and the second grip unit 42 in a state in which the first grip unit 41 and the second grip unit 42 grip the resin members 21B. The moving units 46 and 47 are devices which horizontally move the first grip unit 41 and the second grip unit 42 in the Y-axis direction, and are constituted, for example, by a ball screw.

The pair of guide units 48 are provided at a taking-out position of the base materials 21A at the support unit PA. The pair of guide units 48 are disposed to face each other in the Y-axis direction intersecting a pulling-out direction (X-axis direction) of the base materials 21Ain a plan view, and restrict movement of the base materials 21A in the Y-axis direction. The base materials 21A are sandwiched between the pair of guide units 48, and a slight clearance DA is provided between the guide units 48 and the base materials 21A along the Y-axis direction. Accordingly, when forming the resin members 21B by pulling out the base materials 21A, there is a concern that a variation may occur in a position of the resin members 21B in the Y-axis direction by the clearance DA between the guide units 48 and the base materials 21A.

In contrast, the moving units 46 and 47 can perform alignment of the resin members 21B with respect to the Y-axis direction by moving the first grip unit 41 and the second grip unit 42 along the Y-axis direction in a state in which the first grip unit 41 and the second grip unit 42 grip the resin members 21B. Particularly, in the welding devices 40, the sensor 49 can detect the resin members 21B, and the moving units 46 and 47 can perform alignment of the resin members 21B on the basis of a detection result of the sensor 49. As an example, the moving units 46 and 47 can perform alignment of the resin members 21B with respect to the Y-axis direction so that an edge of the resin members 21B is detected by a plurality of (here, two) sensors 49 (for example, a photoelectric sensor or a camera) arranged along the X-axis direction. Note that, the moving units 46 and 47 are provided independently from each other, and the amount of movement of the first grip unit 41 along the Y-axis direction and the amount of movement of the second grip unit 42 along the Y-axis direction can be set to be different from each other. According to this, an inclination of the resin members 21B with respect to the X-axis direction can also be corrected.

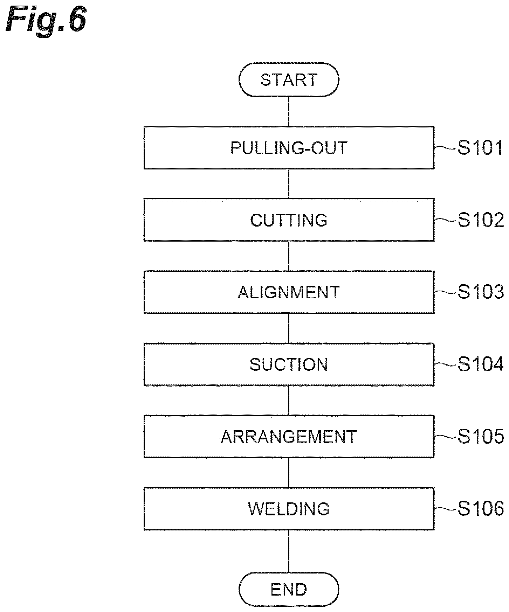

Next, an embodiment of an electrode unit manufacturing method will be described. FIG. 6 is a flowchart illustrating a step of the electrode unit manufacturing method. Here, description will be given of a case of using the electrode unit manufacturing device 50. As illustrated in FIG. 6, in the manufacturing method, first, pulling-out of the base material 21A from the support unit PA (step S101). More specifically, in the step S101, the first grip unit 41 of the welding device 40 is moved along the X-axis direction by the moving unit 46 while gripping one end of the base material 21A held by the support unit PA, thereby pulling out the base materials 21A from the support unit PA. Here, as described above, a pair of the base materials 21A overlapping each other are pulled out.

Next, the base materials 21A are cut (step S102). More specifically, in the step S102, first, the second grip unit 42 further grips the base materials 21A pulled out due to movement of the first grip unit 41 at a position spaced apart from the first grip unit 41. In the step S102, in this state, the cutting unit 43 cuts out the base materials 21A to form the resin member 21B in a state of being gripped by the first grip unit 41 and the second grip unit 42. Here, as described above, a pair of the resin members 21B overlapped each other are formed.

Alignment of the resin members 21B is performed (step S103). More specifically, in the step S103, the moving units 46 and 47 move the first grip unit 41 and the second grip unit 42 in a state of gripping the resin members 21B along the Y-axis direction on the basis of a detection result of the sensor 49 on the resin members 21B, thereby performing alignment of the pair of resin members 21B with respect to the Y-axis direction. According to this, the pair of resin members 21B are aligned with respect to each of the welding units 45, and are set to a defined welding position.

Next, suctioning of the resin members 21B is performed (step S104). More specifically, in the step S104, each of the pair of resin members 21B is suctioned by each upper suction unit and each lower suction unit arranged with the pair of resin members 21B sandwiched therebetween. In this state, after releasing gripping of the resin members 21B by the first grip unit 41 and the second grip unit 42, each upper suction unit and each lower suction unit are moved to be spaced apart from each other, thereby enlarging the interval DB between the pair of resin members 21B.

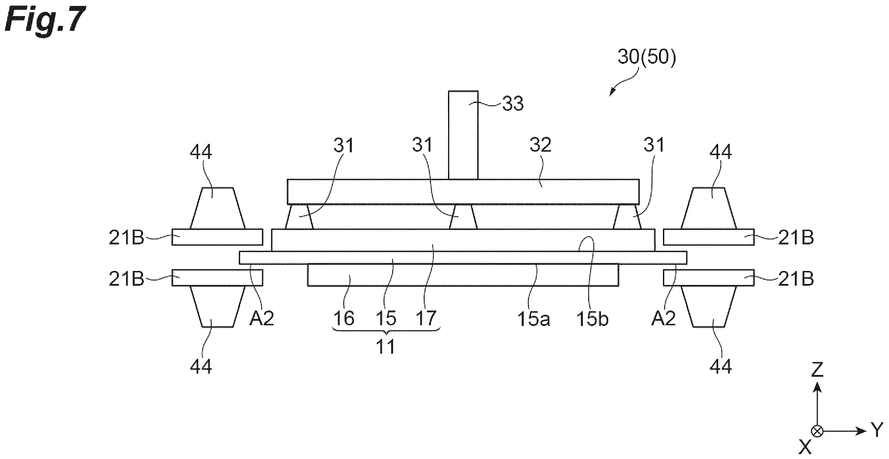

Next, the bipolar electrode 11 is disposed with respect to the resin members 21B (step S105, first step). More specifically, in the step S105, the robot hand 30 transports the bipolar electrode 11 in the air in such a manner that the second regions A2 of the one surface 15a and the other surface 15b of the current collector 15 of the bipolar electrode 11 face the resin members 21B while suctioning and holding the bipolar electrode 11. Here, as illustrated in FIG. 7, the robot hand 30 transports the bipolar electrode 11 in such a manner that the second regions A2 is sandwiched between the pair of resin members 21B in a state in which the interval DB therebetween is enlarged due to movement of the suction units 44. According to this, the pair of resin members 21B are respectively disposed on the one surface 15a and the other surface 15b of the current collector 15. That is, in the step S105, the suction units 44 hold the resin members 21B before welding to the bipolar electrode 11, and dispose the resin members 21B on the current collector 15 (the one surface 15a and the other surface 15b) of the bipolar electrode 11 in a state of being suctioned and held in the air by the robot hand 30.

Then, the pair of resin members 21B are welded to the bipolar electrode 11 (step S106, second step). More specifically, in the step S106, the welding units 45 weld the pair of resin members 21B to the one surface 15a and the other surface 15b of the current collector 15, respectively, in the second regions A2. That is, in the step S106, the welding units 45 weld the pair of resin members 21B to the current collector 15 in a state in which the pair of resin members 21B are disposed on the one surface 15a and the other surface 15b of the current collector 15 due to movement of the suction units 44. Here, the welding units 45 are scattered in the longitudinal direction of the resin members 21B. Accordingly, here, temporary welding in which the resin members 21B are spot-welded and fixed to the current collector 15 by the welding units 45 at a plurality of positions in the longitudinal direction of the resin members 21B is performed.

Note that, in this embodiment, two welding devices 40 are arranged in parallel in the Y-axis direction. Accordingly, the resin members 21B can be collectively welded to two side portions of the current collector 15 of the bipolar electrode 11. Then, when the same step is performed again with respect to other two side portions of the current collector 15 of the bipolar electrode 11, the resin members 21B are provided (temporarily welded) over the entire periphery of the peripheral edge portion 15c of the current collector 15. Accordingly, when the entirety of the resin members 21B is welded to the current collector and the resin members 21B are integrated in the subsequent step, the first resin layer 21 having a frame shape is provided with respect to the peripheral edge portion 15c of the current collector 15, and the electrode unit 11A is obtained.

As described above, the electrode unit manufacturing device 50 according to this embodiment is configured to manufacture the electrode unit 11A by welding the resin members 21B to the bipolar electrode 11 including the current collector 15 and the active material layer provided on the one surface 15a and the other surface 15b of the current collector 15. The electrode unit manufacturing device 50 includes the robot hand 30 that transports the bipolar electrode 11 in the air while suctioning and holding the bipolar electrode 11, and the welding device 40 including the welding units 45 that weld the resin members 21B to the bipolar electrode 11 in a state of being suctioned and held in the air by the robot hand 30.

In addition, the electrode unit manufacturing method according to this embodiment is configured to manufacture the electrode unit 11A by welding the resin members 21B to the bipolar electrode 11 including the current collector 15 and the active material layer provided on the one surface 15a and the other surface 15b of the current collector 15. The electrode unit manufacturing method includes the first step of transporting the bipolar electrode 11 in the air while suctioning and holding the bipolar electrode 11, and the second step of welding the resin members 21B to the bipolar electrode 11 in a state of being suctioned and held in the air after the first step.

In the electrode unit manufacturing device 50 and the electrode unit manufacturing method according to this embodiment, when manufacturing the electrode unit 11A by welding the resin members 21B to the bipolar electrode 11, the resin members 21B are welded to the bipolar electrode 11 in a state in which the bipolar electrode 11 is floated in the air in a state of being suctioned and held. Accordingly, it is possible to avoid that foreign matters which slip down from the bipolar electrode 11 adhere to the subsequent bipolar electrode 11. Accordingly, welding of the resin members 21B can be performed while suppressing foreign matters from adhering to the bipolar electrode 11.

In addition, in the electrode unit manufacturing device 50 according to this embodiment, the welding device 40 includes the suction units 344 which hold the resin members 21B before being welded to the bipolar electrode 11, and dispose the resin members 21B on the front surfaces (the one surface 15a and the other surface 15b) of the bipolar electrode 11 in a state of being suctioned and held in the air by the robot hand 30. In addition, the welding units 45 welds the resin members 21B arranged on the front surfaces by the suction units 44 to the current collector 15. In this way, here, the resin members 21B are arranged and welded with respect to the front surfaces of the current collector 15 of the bipolar electrode 11. Accordingly, it is possible to avoid that foreign matters which slip down from the bipolar electrode 11 adhere to the subsequent electrode. As a result, it is possible to avoid that foreign matters are interposed between the bipolar electrode 11 and the resin members 21B when arranging and welding the resin members 21B.

IN addition, in the electrode unit manufacturing device 50 according to this embodiment, the one surface 15a and the other surface 15b of the current collector 15 include the first region A1 where the active material layer is formed, and the second region A2 exposed from the active material layer, and the robot hand 30 transports the bipolar electrode 11 in such a manner that the second regions A2 face the resin members 21B. In addition, the welding units 45 weld the resin members 21B to the current collector 15 at the second regions A2. In this way, here, the resin members 21B are arranged and welded with respect to the second regions A2 exposed from the active material layer in the current collector 15 of the bipolar electrode 11. Accordingly, it is possible to avoid that foreign matters which slip down from the bipolar electrode 11 adhere to the subsequent bipolar electrode 11. As a result, it is possible to avoid that foreign matters are sandwiched between the bipolar electrode 11 and the resin members 21B in the second regions A2.

In addition, in the electrode unit manufacturing device 50 according to this embodiment, the welding device 40 includes the first grip unit 41 that moves while gripping one end of the base materials 21A for the resin members 21B which are held by the support unit PA to pull out the base materials 21A from the support unit PA, the second grip unit 42 that further grips the base materials 21A pulled out due to movement of the first grip unit 41 at a position spaced apart from the first grip unit 41, and the cutting unit 43 that cuts out the base materials 21A while maintaining a state in which the base materials 21A are gripped by the first grip unit 41 and the second grip unit 42 to form the resin members 21B. Accordingly, formation of the resin members 21B from the base materials 21A can be easily performed.

In addition, in the electrode unit manufacturing device 50 according to this embodiment, the welding device 40 includes the sensor 49 that detects the resin members 21B in a state of being gripped by the first grip unit 41 and the second grip unit 42 after being formed due to cutting-out of the base materials 21A by the cutting unit 43, and the moving units 46 and 47 which perform alignment of the resin members 21B by moving the first grip unit 41 and the second grip unit 42 on the basis of a detection result of the sensor 49 before the resin members 21B are held by the suction units 44. Therefore, positional accuracy of the resin members 21B with respect to a welding position is improved.

In the electrode unit manufacturing device 50, the first grip unit 41 moves while gripping a pair of the base materials 21A which are stacked and held in the support unit PA to pull out the pair of the base materials 21A from the support unit PA. In addition, the second grip unit 42 further grips the pair of base materials 21A pulled out due to movement of the first grip unit 41 at a position spaced apart from the first grip unit 41, and the cutting unit 43 cuts out the pair of base materials 21A to form a pair of the resin members 21B. In addition, the welding device 40 includes the suction units 44 that move in the stacking direction of the resin members 21B while suctioning at least one of the pair of resin members 21B formed by cutting the base materials 21A by the cutting unit 43 to change the interval DB between the pair of resin members 21B. In addition, the robot hand 30 transports the bipolar electrode 11 in such a manner that the second regions A2 are sandwiched between the pair of resin members 21B in which the interval DB is enlarged due to movement of the suction units 44. Then, the welding units 45 weld the pair of resin members 21B to the one surface 15a and the other surface 15b of the current collector 15 in a state in which the pair of resin members 21B are respectively disposed on the one surface 15a and the other surface 15b of the current collector 15 due to movement of the suction units 44. Therefore, the pair of resin members 21B can be formed and welded with respect to the one surface 15a and the other surface 15b of the current collector 15 through pulling-out of the base materials 21A by the first grip unit 41 which is performed once, and cutting-out of the base materials 21A by the cutting unit 43 which is performed once.

In the above-described embodiment, an aspect of the present disclosure has been described. Accordingly, the present disclosure can be arbitrarily modified without limitation to the above-described embodiment.

For example, in the above-described embodiment, description has been given of the step of temporarily welding the resin member 21B with respect to the current collector 15 of the bipolar electrode 11. However, in the electrode unit manufacturing device, main welding of welding the entirety of the resin member 21B to the current collector 15 may be performed without limitation to the configuration in which the temporary welding of arranging the resin member 21B and spot-welding the resin member 21B to the current collector 15 is performed. In this case, in the electrode unit manufacturing device, the robot hand 30 transports an electrode formed by temporarily welding a plurality of (four) resin members 21B to the current collector 15 as described above to a separate welding device while suctioning and holding the electrode. In addition, in a state in which the robot hand 30 suctions and supports the electrode to be floated in the air, the entirety of the plurality of resin members 21B is welded to the current collector 15 by an impulse sealer of the separate welding device. According to this, main welding of the resin members 21B is performed, and the first resin layer 21 is formed at the peripheral edge portion 15c of the current collector 15 (that is, the electrode unit 11A is manufactured).

In addition, the electrode of the electrode unit manufacturing device is not limited to the bipolar electrode 11 described above, and may be set to, for example, any electrode such as the positive terminal electrode 13 and the negative terminal electrode 12 in which the active material layer is provided only one surface of the current collector. In addition, the resin member that is welded to the electrode is not limited to a resin member that constitutes the first resin layer 21, and may be, for example, any resin member that constitutes the second resin layer 23.

In addition, a transport unit that transports an electrode in the air by suctioning and holding the electrode is not limited to the above-described robot hand 30, and another device such as a ceiling transport device may be used. In addition, the arrangement unit that holds the resin member 21B before being welded to the electrode is not limited to the above-described suction unit 44, and another device such as a grip device that grips the resin member 21B from a direction (Z-axis direction) intersecting the stacking direction of the resin member 21B.

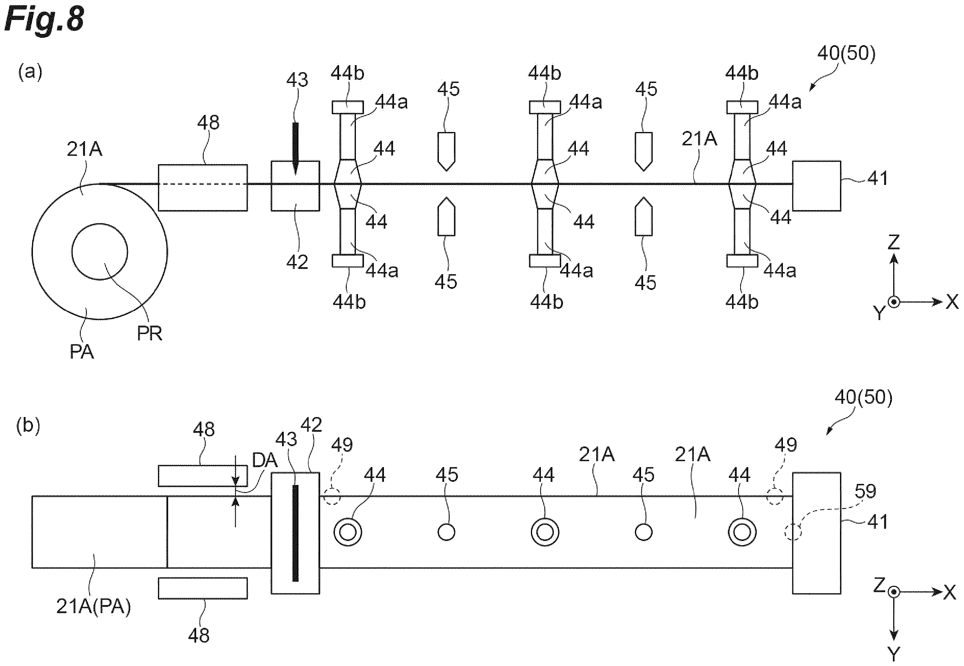

Here, FIG. 8 is a view illustrating a modification example of the welding device. FIG. 8(a) is a side view (view when viewed from the Y-direction), and FIG. 8(b) is a plan view (view when viewed from the Z-direction). As illustrated in FIG. 8, the welding device 40 (that is, the electrode unit manufacturing device 50) may further include a moving unit 44b and a sensor 59. As an example, the moving unit 44b is provided in each of the plurality of pairs of suction units 44. The moving unit 44b can move the suction units 44 along at least the Y-axis direction.

The moving units 44b moves the suction units 44 along the Y-axis direction in a state in which the suction units 44 suction (hold) the resin members 21B, thereby performing alignment of the resin members 21B with respect to the y-axis direction. At this time, gripping of the resin member 21B by the first grip unit 41 and the second grip unit 42 may be released. In the welding device 40, the sensor 49 can detect the resin member 21B suctioned by the suction units 44, and the moving units 44b can perform alignment of the resin member 21B on the basis of a detection result of the sensor 49. As an example, the moving units 44b can perform alignment of the resin member 21B with respect to the Y-axis direction in such a manner that an edge of the resin member 21B is detected by a plurality of the sensors 49 arranged along the X-axis direction. Note that, a plurality of the moving units 44b are provided independently from each other, and when the amount of movement along the Y-axis direction is set to be different in each case, an inclination of the resin member 21B with respect to the X-axis direction can be corrected. Note that, in a case where the welding device 40 is provided with the moving units 44b, the function of the moving units 46 and 47 which relates to the alignment of the resin member 21B (the function of moving the first grip unit 41 and the second grip unit 42 along the Y-axis direction) may be omitted. In the example in FIG. 8, the moving units 46 and 47 are not provided.

In addition, in a case where the welding device 40 is provided with the moving units 44b, procedures of the step S103 and the step S104 in the above-described electrode unit manufacturing method may be exchanged with each other. That is, in this case, first, in the step S104, the resin member 21B is suctioned and held by the suction units 44. Then, for example, after releasing gripping of the resin member 21B by the first grip unit 41 and the second grip unit 42, in the step S103, the moving units 44b move the suction units 44 in a state of holding the resin member 21B along the Y-axis direction on the basis of the detection result of the sensor 49 on the resin member 21B, thereby performing alignment of the resin member 21B with respect to the Y-axis direction. According to this, the resin member 21B is aligned with respect to each of the welding units 45, and is set to a defined welding position.

Note that, the welding device 40 (that is, the electrode unit manufacturing device 50) may further include the sensor 59. The sensor 59 is disposed at a tip end of the base material 21A in the pulling-out direction (here, the X-axis direction). For example, the sensor 59 is a photoelectric sensor or a camera, and can be disposed to detect a boundary between the base material 21A and the first grip unit 41 when pulling out the base material 21A by a defined length as an example. According to this, the welding device 40 can determine whether or not the pulling-out length of the base material 21A is sufficient on the basis of a detection result of the sensor 59.

Note that, the welding device 40 may not include the first grip unit 41, the second grip unit 42, and the cutting unit 43. In this case, in the welding device 40, the resin member 21B can be supplied from the outside. At this time, in the welding device 40, for example, when being subjected to movement in the Z-axis direction for enlarging the interval DB, or movement in the Y-axis direction by the moving units 44b, the suction units (arrangement units) 44 can suction and hold the resin member 21B supplied from the outside or can dispose the resin member 21B on the one surface 15a and the other surface 15b of the bipolar electrode 11.

In addition, in the welding device 40, there is no limitation to a case where after a pair of stacked base materials 21A are pulled out from the support unit PA, a pair of resin members 21B in which the interval DB therebetween is enlarged due to movement of the suction units 44 in the Z-axis direction is obtained. For example, the base material 21A may be pulled out from a plurality of support units which respectively hold a pair of base materials 21A, and the resin members 21B may be constituted by cutting the base materials 21A.

In addition, in the welding device 40, alignment of the resin member 21B by using the sensor 49 or 59, and the moving unit 46, 47, or 44b may not be performed.

### Reference Signs List

11: bipolar electrode (electrode), 11A: electrode unit, 15: current collector, 15a: one surface (front surface), 15b: another surface (rear surface), 21A: base material, 21B: resin member, 30: robot hand (transport unit), 40: welding device, 41: first grip unit, 42: second grip unit, 43: cutting unit, 44: suction unit (arrangement unit), 44b: moving unit, 45: welding unit, 46, 47: moving unit, 48: guide unit, 49: sensor, 50: electrode unit manufacturing device.

## Claims

1. An electrode unit manufacturing device for manufacturing an electrode unit by welding a resin member to an electrode including a current collector and an active material layer provided on a front surface of the current collector, the device comprising:
a transport unit configured to transport the electrode in the air while suctioning and holding the electrode; and
a welding device including a welding unit configured to weld the resin member to the electrode in a state of being suctioned and held in the air by the transport unit.

2. The electrode unit manufacturing device according to claim 1,
wherein the welding device includes an arrangement unit configured to hold the resin member before being welded to the electrode and to arrange the resin member on the front surface of the electrode in the state of being suctioned and held in the air by the transport unit, and
the welding unit welds the resin member arranged on the front surface by the arrangement unit to the current collector.

3. The electrode unit manufacturing device according to claim 2,
wherein the welding device includes,
a first grip unit configured to move while gripping one end of a base material held by a support unit to pull out the base material from the support unit,
a second grip unit configured to further grip the base material pulled out by movement of the first grip unit at a position spaced apart from the first grip unit, and
a cutting unit configured to cut out the base material while maintaining a state where the base material is gripped by the first grip unit and the second grip unit to form the resin member.

4. The electrode unit manufacturing device according to claim 3,
wherein the welding device includes,
a sensor configured to detect the resin member in a state of being gripped by the first grip unit and the second grip unit, and
a moving unit configured to perform alignment of the resin member on the basis of a detection result of the sensor by moving the first grip unit and the second grip unit before the resin member is held by the arrangement unit.

5. The electrode unit manufacturing device according to claim 3 or 4,
wherein the first grip unit moves while gripping a pair of the base materials stacked and held in the support unit to pull out the pair of base materials from the support unit,
the second grip unit further grips the pair of base materials pulled out by movement of the first grip unit at a position spaced apart from the first grip unit,
the cutting unit cuts the pair of base materials to form a pair of the resin members,
the arrangement unit moves in a stacking direction of the resin member while holding at least one of the pair of resin members to change an interval between the pair of resin members,
the transport unit transports the electrode in such a manner that the current collector is sandwiched between the pair of resin members in a state in which an interval between the pair of resin members is enlarged due to movement of the arrangement unit, and
the welding unit welds each of the pair of resin members to the current collector in a state in which the pair of resin members are respectively arranged on the front surface of the current collector and a rear surface opposite to the front surface of the current collector due to movement of the arrangement unit.

6. The electrode unit manufacturing device according to claim 2 or 3,
wherein the welding device includes,
a sensor configured to detect the resin member in a state of being held by the arrangement unit, and
a moving unit configured to move the arrangement unit in a state in which the resin member is held by the arrangement unit to perform alignment of the resin member on the basis of a detection result of the sensor.

7. An electrode unit manufacturing method for manufacturing an electrode unit by welding a resin member to an electrode including a current collector and an active material layer provided on a front surface of the current collector, the method comprising:
a first step of transporting the electrode in the air while suctioning and holding the electrode; and
a second step of welding the resin member to the electrode in a state of being suctioned and held in the air after the first step.
